# EUROPÄISCHE PATENTSCHRIFT

(11) **EP 1 945 985 B1**
(45) Veröffentlichungstag und Bekanntmachung des Hinweises auf die Patenterteilung: **15.06.2011**
(21) Anmeldenummer: 06829957.7
(22) Anmeldetag: 08.11.2006
(51) Int. Cl.: F16L 21/03, F16L 17/02

(54) **VERBINDUNGSSYSTEM FÜR LEITUNGEN, ARMATUREN ODER AGGREGATE**
CONNECTING SYSTEM FOR CONDUITS, FITTINGS OR ASSEMBLIES
SYSTEME DE LIAISON POUR CONDUITES, ARMATURES OU UNITES

(30) Priorität: 08.11.2005 WO PCT/EP2005/055819; 08.05.2006 DE 202006007408 U
(43) Veröffentlichungstag der Anmeldung: 23.07.2008
(73) Patentinhaber: Voss Automotive GmbH, 51688 Wipperfürth (DE)
(72) Erfinder: ZENSES, Frank, 50354 Hürth (DE); TERLAU, Norbert, 51515 Kürten (DE); LECHNER, Martin, 51789 Lindlar (DE)
(74) Vertreter: Patentanwälte Dr. Solf & Zapf
(86) Internationale Anmeldenummer: PCT/EP2006/068227
(87) Internationale Veröffentlichungsnummer: WO 2007/054510

(56) Entgegenhaltungen:
- US-A- 2 462 596
- US-A- 4 078 813
- US-A- 4 298 204
- US-A- 6 010 161

## Beschreibung

Die vorliegende Erfindung betrifft ein Verbindungssystem für Leitungen, Armaturen oder Aggregate, die zur Führung eines mit einem gegenüber einem Vergleichsdruck erhöhten Druck beaufschlagten Fluids bestimmt sind, umfassend ein erstes Kupplungsteil, wie ein Gehäuseteil, ein mit dem ersten Kupplungsteil verbindbares zweites Kupplungsteil, wie z. B. ein Steckerteil, und mindestens eine aus einem Elastomer bestehende Umfangsdichtung, die in einer Nut angeordnet ist, welche umfangsgemäß in einem der beiden Kupplungsteile ausgebildet ist und einen Nutgrund sowie zwei Nutflanken aufweist, wobei die Umfangsdichtung im Betriebszustand in der Nut eine Position einnimmt, in der die Umfangsdichtung unter Deformation und Erzeugung einer Vorpresskraft einen Spalt zwischen den Kupplungsteilen verschließt, wobei die Umfangsdichtung - wenn die Kupplungsteile miteinander verbunden sind, in der Position gehalten ist, in der die Umfangsdichtung im Betriebszustand den Spalt der Aufnahmeöffnung verschließt.

Ein solches Verbindungssystem ist aus dem deutschen Gebrauchsmuster DE 20 2004 017 316 U1 bekannt. Bei diesem bekannten Verbindungssystem ist vorgesehen, dass das zweite Kupplungsteil entlang einer Steckachse in eine Aufnahmeöffnung des ersten Kupplungsteils mit einem Schaft, auf dessen Mantelfläche die Nut umfangsgemäß verläuft, einsteckbar ist, wodurch senkrecht zur Steckachse eine radiale Verpressung der Umfangsdichtung erfolgt. Der Gegenstand des genannten Gebrauchsmuster ist dabei ein Verbindungssystem, welches gegenüber früheren gleichartigen Verbindungssystemen eine erhöhte Montagefreundlichkeit besitzt und dabei gewährleistet, dass nur eine geringe Menge an Fluid durch die Umfangsdichtung durchgesetzt wird und dass das Verbindungssystem im Betriebszustand sowie bei der Herstellung der Kupplungsverbindung eine hohe Funktionssicherheit aufweist. Um dies zu erreichen, ist vorgesehen, dass in der Nut Mittel zur mechanischen Hemmung einer axialen Bewegung der Umfangsdichtung angeordnet sind, die derart ausgeführt sind, dass die Umfangsdichtung - sowohl, wenn das eine Kupplungsteil mit dem Schaft in die Aufnahmeöffnung des anderen Kupplungsteiles eingesteckt wird, als auch bei einer entgegengesetzt wirkenden relativen Rückbewegung der Kupplungsteile zueinander - in der Position gehalten ist, in der die Umfangsdichtung im Betriebszustand den Spalt der Aufnahmeöffnung verschließt und dabei mit einer axial gerichteten Anlagefläche an einer auf der Seite des abzudichtenden Spaltes liegenden Nutflanke anliegt. Diese Mittel hemmen somit eine mögliche Axialverschiebung der Umfangsdichtung in der Nut, wobei die Umfangsdichtung asymmetrisch in der Nut angeordnet sein kann, indem zu der Nutflanke, die der auf der Seite des abzudichtenden Spaltes liegenden Nutflanke gegenüber liegt, ein Abstand bestehen kann.

Wenn eine Verrastung der beiden Kupplungsteile erfolgt, bei der das Stecksystem ein üblicherweise erforderliches axiales Spiel hat, wobei auch beim Stecken des Steckerteils dieses minimal übersteckt werden kann, werden bei einem sich an das Stecken anschließenden Zurückziehen bzw. -schieben eines der beiden Kupplungsteile zur Steckkontrolle oder bei einer späteren Beaufschlagung mit Systemdruck die Kupplungsteile wieder auseinander gedrückt. Bei dieser Bewegung wird auch die Umfangsdichtung mitbewegt. Durch das Vorhandensein der in der Nut vorgesehenen Mittel zur mechanischen Hemmung der axialen Bewegung der Umfangsdichtung wird dabei - auch dann, wenn die Umfangsdichtung mit großer Anpresskraft und Kontaktlänge insbesondere am Innenumfang des als Gehäuseteils ausgebildeten Kupplungsteils anliegt - die Umfangsdichtung nicht von der Nutflanke, an der sie im Betriebszustand bestimmungsgemäß anliegen soll, weggedrängt. Dadurch wird gesichert, dass eine permeationsbestimmende Länge einer Bogenlinie der verpressten, radialen Querschnittsfläche der deformierten Umfangsdichtung, die sich im Bereich des abzudichtenden Spaltes befindet, bei verschwindender Bogenkrümmung einen Minimalwert annimmt.

Das bekannte Stecksystem hat sich in der Praxis bewährt, wobei besonders die technische Lösung zur Verhinderung des Anlagewechsels der Umfangsdichtung, bei der es sich beispielsweise um einen O-Ring oder eine Formdichtung, wie einen Quadring, handeln kann, als vorteilhaft hervorzuheben ist.

Ein Problem besteht jedoch darin, dass einerseits hinsichtlich eines als Quotient aus einem in der Nut liegenden Anteil des verpreßten, radialen Querschnitts der Umfangsdichtung und der Querschnittsfläche der Nut berechneten Füllgrades der Nut zur Erzielung einer optimalen Dichtungswirkung hohe Werte gefordert werden, die 100 Prozent erreichen können, andererseits jedoch gleichzeitig in der DE 20 2004 017 316 U1 darauf hingewiesen wird, dass unter Beachtung einer möglichen Wärmeausdehnung der Umfangsdichtung eine Extrusion in den abzudichtenden Spalt möglichst vermieden werden sollte. Ein ähnliches Problem entsteht bei einer möglichen Quellung der Umfangsdichtung unter dem Einfluss des Fluids und wird besonders relevant, wenn nur ein geringer Bauraum konzipiert ist.

Der vorliegenden Erfindung liegt die Aufgabe zugrunde, ein Verbindungssystem der eingangs genannten Art für Leitungen, Armaturen oder Aggregate derart zu verbessern, dass bei Gewährleistung einer hohen Montagefreundlichkeit bei der Herstellung der Kupplungsverbindung, insbesondere auch bei beengten Bauraumverhältnissen, eine hohe Funktionssicherheit sowie eine geringe Menge des durch die Umfangsdichtung durchgesetzten Fluids im Betriebszustand erreicht sowie unter Umwelteinflüssen, wie Temperatur und Druck sowie bevorzugt auch wechselndem chemisch-physikalischen Mediencharakter des Fluids, aufrechterhalten werden kann.

Dies wird durch ein System gemäß Anspruch 1 erreicht.

Der erfindungsgemäß vorgesehene "Expansionsraum" kann somit vorteilhafterweise nicht nur im strengen physikalischen Sinn die Funktion der Schaffung eines zusätzlichen Raumes zur Aufnahme eines vergrößerten Volumenteils der Umfangsdichtung erfüllen, sondern auch die Funktion der Bildung eines "Ausweichraums" zur Aufnahme eines deformierten Volumenteils der Umfangsdichtung.

So kann gewährleistet werden, dass der Füllgrad der Nut kleiner als 100 Prozent bleibt und höchstens im Ausnahmefall, unter als extrem anzunehmenden Temperatur- und Druckbedingungen, den Wert von 100 Prozent annimmt, wobei eine Spaltextrusion jedoch zuverlässig ausgeschlossen ist.

Hierbei sind grundsätzlich zumindest zwei verschiedene Ausgestaltungsformen des erfindungsgemäß vorgesehenen Expansionsraumes möglich, die jeweils einzeln allein oder gemeinsam als Teilexpansionsräume vorliegen können.

Zum einen kann vorgesehen sein, dass der Expansionsraum einen Raum, insbesondere einen ersten Teilexpansionsraum, umfasst, der durch eine Bemessung des Abstandes zwischen den beiden Nutflanken gebildet ist. Diese Ausbildung ist besonders von Vorteil, wenn die Umfangsdichtung ausschließlich an der Nutflanke auf der Seite des abzudichtenden Spaltes anliegt und von der gegenüberliegenden Nutflanke beabstandet ist. Der erste Teilexpansionsraum kann dabei insbesondere im Betriebszustand mit dem Spalt zwischen den Kupplungsteilen in direkter Verbindung stehen und derart ausgebildet sein, dass im Betriebszustand der gegenüber dem Vergleichsdruck erhöhte Druck die Vorpresskraft der Umfangsdichtung erhöht, wodurch vorteilhafterweise auch die Dichtungswirkung der Umfangsdichtung erhöht wird.

Des Weiteren kann vorgesehen sein, dass der Expansionsraum einen Raum, insbesondere einen zweiten Teilexpansionsraum, umfasst, der durch eine Vertiefung im Nutgrund der Nut gebildet ist. Diese Ausbildung ist besonders von Vorteil, wenn die Umfangsdichtung an beiden Nutflanken anliegt, wobei die vorzugsweise asymmetrische Lage der Umfangsdichtung in der Nut durch eine asymmetrische Form des Querschnitts der verpressten Umfangsdichtung hervorgerufen wird. Im Betriebszustand kann dabei die Umfangsdichtung insbesondere zwischen dem zweiten Teilexpansionsraum und dem Spalt zwischen den Kupplungsteilen angeordnet und derart ausgebildet sein, dass im Betriebszustand der gegenüber dem Vergleichsdruck erhöhte Druck einen Teil der Umfangsdichtung in den zweiten Teilexpansionsraum drängt.

Ein weiterer Vorteil des erfindungsgemäßen Verbindungssystems besteht in seiner universellen Einsetzbarkeit. So ist es mit dem erfindungsgemäßen Verbindungssystem - beispielsweise in Stecksystemen - möglich, die Abdichtung eines Kreisringspalts vorzunehmen, andererseits aber auch - beispielsweise beim Leitungsanschluss an Armaturen oder Aggregate - die Abdichtung eines Radialspalts zu realisieren.

Hierbei kann jeweils der Expansionsraum, insbesondere dessen erster Teilexpansionsraum und/oder dessen zweiter Teilexpansionsraum, derart ausgebildet sein, dass eine Expansion der Umfangsdichtung, wie sie im Betriebszustand bei einer gegenüber der Raumtemperatur erhöhten Temperatur oder durch. Quellung unter dem Einfluss des Fluids auftritt, senkrecht zur Wirkungsrichtung der Vorpresskraft oder auch in Wirkungsrichtung der Vorpresskraft erfolgt.

Der Vorteil eines Expansionsraumes, der senkrecht zu einer radialen Verpressungsrichtung ausgebildet ist, besteht insbesondere bei Erfüllung der der Erfindung zugrunde liegenden Aufgabe in einer wirksamen Verhinderung eines Anlage- bzw. Positionswechsels der Umfangsdichtung zwischen den Nutflanken, was insbesondere bei Stecksystemen von Bedeutung ist.

Auch bei axialer Verpressungsrichtung kann ein Expansionsraum senkrecht zur Verpressungsrichtung von Vorteil sein, um z. B. durch eine geringe Nuttiefe Bauraumvorteile zu erhalten.

Wenn eine Umfangsdichtung, beispielsweise ein O-Ring mit einer axialen Verpressung eingebaut werden soll, so ist es wichtig, dass die Umfangsdichtung derart dimensioniert wird, dass sie an der dem erhöhten Druck abgewandten Nutflanke anliegt. Hier bietet die Anwendung des erfindungsgemäßen Verbindungssystems insbesondere dann einen Vorteil, wenn die Umfangsdichtung vor der Verpressung in dem Kupplungsteil mit Nut vormontiert und dabei vorzugsweise vor einem Herausfallen geschützt werden soll. Letzteres ist z. B. dadurch möglich, dass eine Nutflanke mit Hinterschnitt vorgesehen wird, an der die Umfangsdichtung anliegt. Aus dieser konstruktiven Gestaltung kann sich somit die Notwendigkeit ergeben, dass die Umfangsdichtung an beiden Nutflanken anliegen muss. Das Problem kann insbesondere durch den erfindungsgemäßen Expansionsraum in der Form gelöst werden, wie er vorstehend in seiner Ausbildung als zweiter Teilexpansionsraum beschrieben wurde, wobei dieser sich in Verpressungsrichtung der Umfangsdichtung, insbesondere auf der druckzugewandten Seite der Nut, erstreckt.

Diese Ausbildung des Expansionsraumes ist auch bei Einbauverhältnissen von Vorteil, wo eine Umfangsdichtung, wie ein O-Ring, im eingebauten und ansonsten - thermisch, chemisch und durch Fluiddruck - unbelasteten Zustand bekanntermaßen um circa 30 % ihres Schnurdurchmessers verpresst wird und die Nuttiefe in Abhängigkeit von der Schnurstärke der Dichtung bemessen wird. Durch den Expansionsraum können hier veränderte Verhältnisse realisiert werden und ein gegenüber dem bekannten deutlich größerer prozentualer Verpressungsweg im Hinblick auf den Schnurdurchmesser erzielt werden. Dies kann sich insbesondere auf die Bauraumverhältnisse günstig erweisen.

Generell ist ein sich in Verpressungsrichtung der Umfangsdichtung erstreckender Expansionsraum, der grundsätzlich sowohl bei axialer, als auch beim Einbau mit radialer Verpressung eingesetzt werden kann, insbesondere dann von Vorteil, wenn quer zur Verpressungsrichtung, z. B. wegen der Einbausituation, nur ein geringer Bauraum zur Verfügung steht. Ein sich quer zur Verpressungsrichtung der Umfangsdichtung erstreckender Expansionsraum ist insbesondere dann von Vorteil, wenn in Verpressungsrichtung nur ein geringer Bauraum zur Verfügung steht.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: einen Längsschnitt durch ein erfindungsgemäßes Verbindungssystem in einer ersten Ausführung bei Raumtemperatur,
- Fig. 2: einen Längsschnitt durch das in Fig. 1 dargestellte erfindungsgemäße Verbindungssystem bei einer gegenüber der Raumtemperatur erhöhten Temperatur,
- Fig. 3: einen Längsschnitt durch ein erfindungsgemäßes Verbindungssystem in einer zweiten Ausführung bei Raumtemperatur, ohne Druckbeauf- schlagung,
- Fig. 4: einen Längsschnitt durch das in Fig. 3 dargestellte erfindungsgemäße Verbindungssystem bei einer gegenüber der Raumtemperatur erhöhten Temperatur, ohne.Druckbeaufschlagung,
- Fig. 5: einen Längsschnitt durch das in Fig. 3 und 4 dargestellte erfindungs- gemäße Verbindungssystem bei einer gegenüber der Raumtemperatur erhöhten Temperatur, mit Druckbeaufschlagung,
- Fig. 6: einen Längsschnitt durch ein erfindungsgemäßes Verbindungssystem in einer dritten Ausführung bei Raumtemperatur, ohne Druckbeauf- schlagung,
- Fig. 7: einen Längsschnitt durch das in Fig. 6 dargestellte erfindungsgemäße Verbindungssystem bei einer gegenüber der Raumtemperatur erhöhten Temperatur, ohne Druckbeaufschlagung,
- Fig. 8: einen Längsschnitt durch das in Fig. 6 und 7 dargestellte erfindungs- gemäße Verbindungssystem bei einer gegenüber der Raumtemperatur erhöhten Temperatur, mit Druckbeaufschlagung,
- Fig. 9: einen Längsschnitt durch ein zweites Kupplungsteil einer vierten Aus- führung eines erfindungsgemäßen Verbindungssystems,
- Fig. 10: einen Längsschnitt durch das in Fig. 9 dargestellte Kupplungsteil nach einer Vormontage einer Umfangsdichtung,
- Fig. 11: einen Längsschnitt durch das in Fig. 9 und 10 dargestellte erfindungs- gemäße Verbindungssystem bei Raumtemperatur, ohne Druckbeauf- schlagung,
- Fig. 12 bis 14: Längsschnitte von weiteren Ausführungsformen eines erfindungsge- mäßen Verbindungssystems, jeweils in einer Darstellung wie in Fig. 6,
- Fig. 15: eine perspektivische Darstellung einer als O-Ringdichtung ausgebildeten Umfangsdichtung zur geometrischen Veranschaulichung der Kräftever- hältnisse in einem erfindungsgemäßen Verbindungssystem bei axialer und radialer Verpressung der Umfangsdichtung.

In den verschiedenen Figuren der Zeichnung sind gleiche Teile stets mit den gleichen Bezugszeichen versehen und werden daher im Folgenden in der Regel jeweils nur einmal beschrieben.

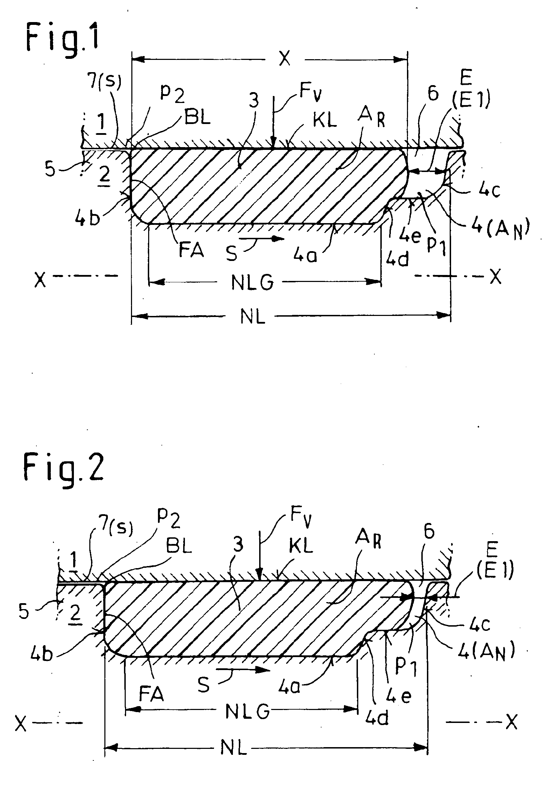

Wie sich zunächst aus Fig. 1 und 2 ergibt, umfasst ein erfindungsgemäßes Verbindungssystem für Leitungen, Armaturen oder Aggregate, die zur Führung eines mit einem gegenüber einem Vergleichsdruck p₂ erhöhten Druck p₁ beaufschlagten Fluids bestimmt sind, ein erstes Kupplungsteil 1, wie ein Gehäuseteil, ein mit dem ersten Kupplungsteil 1 verbindbares zweites Kupplungsteil 2, wie ein Steckerteil, und mindestens eine aus einem Elastomer bestehende Umfangsdichtung 3, die in einer Nut 4 angeordnet ist.

Das erste Kupplungsteil 1 und/oder das zweite Kupplungsteil 2 können aus Kunststoff oder bevorzugt aus metallischen Werkstoffen bestehen.

Die Umfangsdichtung 3 kann bevorzugt aus einer polymeren Fluor-Kohlenstoffverbindung oder aus synthetischem Kautschuk, wie Silikonkautschuk, NBR oder H-NBR, PUR, EPDM, SBR, o.ä. bestehen.

Der das Fluid beaufschlagende Druck p₁ kann im Bereich von bis zu etwa 100 bar bei pneumatischen Anwendungen und bei bis zu etwa 2500 bar bei hydraulischen Anwendungen liegen. Es kann sich auch um einen Unterdruck handeln.

Bei der in Fig. 1 und 2 gezeigten ersten Ausführung der Erfindung handelt es sich im Besonderen um ein Verbindungssystem, bei dem das zweite Kupplungsteil 2 entlang einer Steckachse X-X in eine Aufnahmeöffnung 6 des ersten Kupplungsteils 1 mit einem Schaft 5, auf dessen Mantelfläche die Nut 4 umfangsgemäß verläuft, einsteckbar ist, wodurch senkrecht zur Steckachse eine radiale Verpressung der Umfangsdichtung 3 erfolgt. Alternativ kann die Nut 4 in dem ersten Kupplungsteil 1 ausgebildet sein.

Die Nut 4 ist umfangsgemäß in dem zweiten Kupplungsteil 2 ausgebildet und weist einen Nutgrund 4a sowie zwei Nutflanken 4b, 4c auf. Die Umfangsdichtung 3 nimmt im Betriebszustand in der Nut 4 eine bevorzugte Position ein, in der sie unter Deformation und Erzeugung einer Vorpresskraft Fᵥ einen Spalt 7, insbesondere einen Kreisringspalt mit der Spaltweite s, zwischen den Kupplungsteilen 1, 2 verschließt. Die Umfangsdichtung 3 ist - sowohl, wenn die Kupplungsteile 1, 2 voneinander getrennt, als auch miteinander verbunden sind - in der Position gehalten, in der sie im Betriebszustand den Spalt 7 der Aufnahmeöffnung 6 verschließt und dabei mit einer Anlagefläche FA an einer auf der Seite des abzudichtenden Spaltes 7 liegenden Nutflanke 4b anliegt.

Die Umfangsdichtung 3 ist im Betriebszustand in asymmetrischer Lage in der Nut 4 angeordnet, wobei eine permeationsbestimmende Länge einer Bogenlinie BL der verpressten, radialen Querschnittsfläche A_{R} der deformierten Umfangsdichtung 3 bei verschwindender Bogenkrümmung einen Minimalwert annimmt. Dadurch wird erreicht, dass im Betriebszustand nur eine geringe Menge des im erfindungsgemäßen Verbindungssystem geführten Fluids durch die Umfangsdichtung 3 durchgesetzt wird.

Die Einnahme der - wie dargestellt - asymmetrischen Lage der Umfangsdichtung 3 kann bei entsprechender Dimensionierung der Umfangsdichtung und der Nut 4 auch dadurch unterstützt werden, dass die Umfangsdichtung 3 durch die Differenz zwischen dem erhöhten Druck p₁ und dem Vergleichsdruck p₂ in axialer Richtung X-X gegen die Nutflanke 4b auf der Seite des niedrigeren Druckes p₂ gedrückt wird, während auf der anderen Seite der Nut 4 der bereits erwähnte Expansionsraum E besteht. Da das System bis zur Inbetriebnahme noch drucklos ist, kann nach einem eventuellen Zurückziehen des Schaftes 5 durch Aufbringen eines Druckstoßes auf der Seite des erhöhten Druckes p₁ die Position der Umfangsdichtung 3 auch gezielt korrigiert werden, wobei insbesondere eine über die Kontaktlänge KL auftretende Haftreibungskraft zu überwinden ist.

Des Weiteren ist vorgesehen, dass das zweite Kupplungsteil 2 als Mittel zur mechanischen Hemmung einer axialen Bewegung der Umfangsdichtung 3 eine im Nutgrund 4a ausgebildete Schrägfläche 4d aufweist. Diese Schrägfläche 4d ist eben, könnte aber auch gekrümmt, insbesondere konvex gekrümmt, sein und verläuft in Richtung S des axialen Einsteckens des zweiten Kupplungsteils 2 in die Aufnahmeöffnung 6 des ersten Kupplungsteiles 1 radial nach außen. Unter Mittel zur mechanischen Hemmung einer axialen Bewegung der Umfangsdichtung 3 wird dabei verstanden, dass diese im konkreten Fall die Schrägfläche 4d - derart ausgeführt sind, dass die Umfangsdichtung 3 ausschließlich - also sowohl, wenn das eine Kupplungsteil 2 mit dem Schaft 5 in die Aufnahmeöffnung 6 des anderen Kupplungsteiles 1 eingesteckt wird, als auch bei einer entgegengesetzt wirkenden relativen Rückbewegung der Kupplungsteile 1, 2 zueinander - in der Position gehalten ist, in der die Umfangsdichtung 3 im Betriebszustand den Spalt 7 der Aufnahmeöffnung 6 verschließt und dabei mit der axial gerichteten Anlagefläche FA an der auf der Seite des abzudichtenden Spaltes 7 liegenden Nutflanke 4b anliegt.

Erfindungsgemäß ist nun vorgesehen, dass in der Nut 4 ein Expansionsraum E für die Umfangsdichtung 3 ausgebildet ist, der die Umfangsdichtung 3 derart aufnimmt, dass bei einer Volumenvergrößerung der Umfangsdichtung 3, wie sie im Betriebszustand bei einer gegenüber der Raumtemperatur erhöhten Temperatur oder durch Quellung unter dem Einfluss des Fluids auftritt, oder bei einer Deformation der Umfangsdichtung, wie sie unter dem Einfluss der Vorpresskraft Fᵥ oder des erhöhten Drucks p₁ auftritt, ein Füllgrad der Nut. 4, der sich als Quotient aus der radialen Querschnittsfläche A_{R} der verpressten Umfangsdichtung 3 und der Querschnittsfläche AN der Nut 4 ergibt, immer kleiner ist als 100 Prozent.

Aus Fig. 1 und 2, die der Veranschaulichung des Nutfüllungsgrades bei Raumtemperatur (Fig. 1), d. h. insbesondere bei 23 °C, und bei gegenüber der Raumtemperatur erhöhter Temperatur (Fig. 2), d. h. insbesondere bei einer etwa Betriebsbedingungen entsprechenden Temperatur von 150 °C, dienen, wird deutlich, dass bei der asymmetrischen Anordnung der Umfangsdichtung in der Nut 4, der Nutfüllungsgrad kleiner als 100 Prozent bleibt. Dies gilt sowohl bei Raumtemperatur, als auch bei der für den Betrieb charakteristischen Temperatur, bei der es zu einer Wärmeausdehnung der Umfangsdichtung 3 in Steckrichtung S gekommen ist. Charakteristisch für die unvollständige Nutfüllung ist dabei der Raum E1, der im Weiteren auch als erster Teilexpansionsraum E1 bezeichnet wird oder als Expansionsraum E1 erster Art bezeichnet werden könnte und durch den Abstand der Umfangsdichtung 3 von der Nutflanke 4c auf der Seite des höheren Druckes p₁ bestimmt wird, welcher größer ist als Null.

Der Raum E1 kann dabei insbesondere durch eine Bemessung des Abstandes NL zwischen den beiden Nutflanken 4b, 4c bestimmt sein, bei der antizipativ die für das erfindungsgemäße Verbindungssystem zu erwartenden Betriebsbedingungen sowie der Wärmeausdehnungskoeffizient und das Quellungsverhalten des Materials der Umfangsdichtung 3 im jeweils vorgesehenen Fluid berücksichtigt werden.

Die Nutlänge NL und die Länge NLG (Abstand zwischen 4d und 4b) des Nutgrundes 4a können mit Vorteil im Hinblick auf eine maximale axiale Hauptabmessung des Querschnitts der Umfangsdichtung 3 im unverpressten Zustand, wie bei einem O-Ring den Schnurdurchmesser, bzw. auf die entsprechende charakteristische Hauptabmessung X im verpressten Zustand dimensioniert sein. Die genannte Hauptabmessung X sollte bei Raumtemperatur nicht kleiner, aber auch nicht wesentlich größer als die Länge NLG des Nutgrundes 4a sein. Insbesondere sollte die axiale Hauptabmessung X der auf dem zweiten Kupplungsteil 2 montierten, aber noch nicht verpreßten Umfangsdichtung 3 nicht so groß sein, dass die Umfangsdichtung 3 bei Anlage an der zur Anlage bestimmten Nutflanke 4b über die Schrägfläche 4d bzw. über eine gegebenenfalls - wie dargestellt - vorhandene Stufe 4e in Richtung S auf die Nutflanke 4c auf der Seite des höheren Druckes p₁ hinaus geschoben wird.

Für den Expansionsraum E in der ersten Ausführung der Erfindung, also gemäß den vorstehenden Ausführungen den ersten Teilexpansionsraum E1, ist charakteristisch, dass dieser im Betriebszustand mit dem Spalt 7 zwischen den Kupplungsteilen 1, 2 in direkter Verbindung steht. Er ist derart ausgebildet, dass im Betriebszustand der gegenüber dem Vergleichsdruck p₂ erhöhte Druck p₁ die Vorpresskraft Fᵥ der Umfangsdichtung 3 erhöht.

In alternativer Ausbildung könnte der erste Teilexpansionsraum E1 im Betriebszustand auch mit dem Spalt 7 zwischen den Kupplungsteilen 1, 2 nicht in direkter Verbindung stehen, indem er z. B. durch einen Hinterschnitt in der Nut 4 gebildet ist.

Bei axialer Verpressung könnte der Teilexpansionsraum E1 in analoger Weise ausgeführt sein, vorteilhafterweise indem die zu verbindenden Kupplungsteile 1, 2 mit verschwindend kleiner Spaltweite s dimensioniert sind.

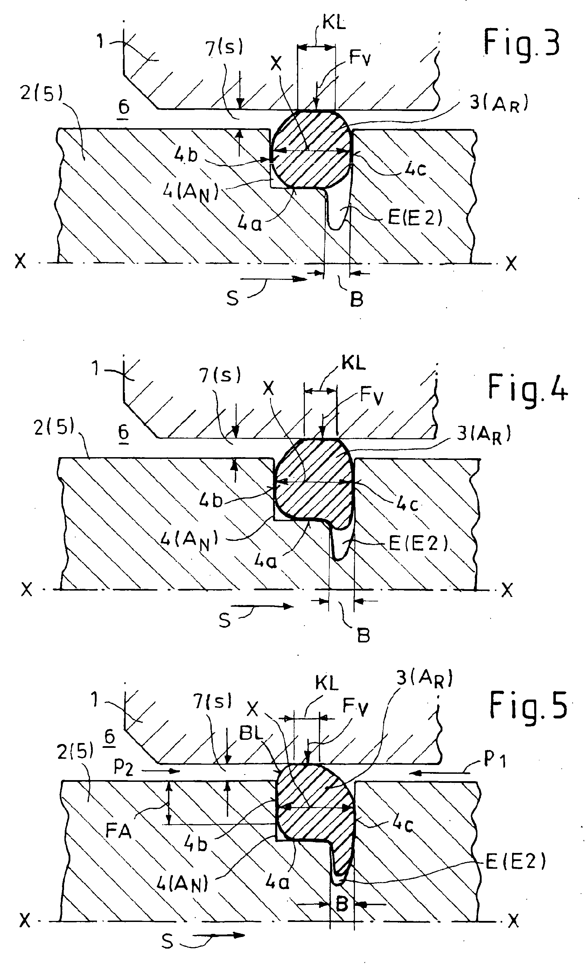

Auch bei den in Fig. 3 bis 11 dargestellten weiteren Ausführungen der Erfindung ist vorgesehen, dass in der Nut 4 ein Expansionsraum E für die Umfangsdichtung 3 ausgebildet ist, der die Umfangsdichtung 3 derart aufnimmt, dass bei einer Volumenvergrößerung der Umfangsdichtung 3, wie sie im Betriebszustand bei einer gegenüber der Raumtemperatur erhöhten Temperatur oder durch Quellung unter dem Einfluss des Fluids auftritt, oder bei einer Deformation der Umfangsdichtung, wie sie unter dem Einfluss der Vorpresskraft Fᵥ öder des erhöhten Drucks p₁ auftritt, ein Füllgrad der Nut 4, der sich als Quotient aus der radialen Querschnittsfläche A_{R} der verpressten Umfangsdichtung 3 und der Querschnittsfläche AN der Nut 4 ergibt, immer kleiner ist als 100 Prozent.

Charakteristisch für die unvollständige Nutfüllung ist dabei aber ein Raum E2, der im Weiteren auch als zweiter Teilexpansionsraum E2 bezeichnet wird oder als Expansionsraum E2 zweiter Art bezeichnet werden könnte und der durch eine Vertiefung im Nutgrund 4a der Nut 4 gebildet ist.

Hierbei ist in bevorzugter Ausführung vorgesehen, dass die Breite B der Vertiefung im Nutgrund 4a klein gegenüber einer maximalen axialen Hauptabmessung des Querschnitts der Umfangsdichtung 3 im unverpressten Zustand, wie bei einem O-Ring gegenüber dem Schnurdurchmesser, bzw. - wie dargestellt - einer maximalen axialen Hauptabmessung X des radialen Querschnitts A_{R} der Umfangsdichtung 3 im verpressten Zustand ist.

Außerdem kann - wie der Zeichnung zu entnehmen ist - dabei vorgesehen sein, dass sich die Breite B der Vertiefung mit Zunahme ihrer Tiefe T vom Nutgrund 4a der Nut 4 ausgehend verjüngt. Die Tiefe T sollte dabei vorzugsweise größer sein als die Breite B der Vertiefung. Auf diese Weise kann sich die Umfangsdichtung 3 in optimaler Weise in den Expansionsraum E bzw. E2 einformen.

In fertigungstechnisch und im Hinblick auf die zu erzielende Dichtungswirkung günstiger Weise kann dabei insbesondere - wie ebenfalls dargestellt - eine Seitenwand der Vertiefung durch eine der beiden Nutflanken 4b, 4c der Nut 4, insbesondere durch die der Nutflanke 4b auf der Seite des abzudichtenden Spaltes 7 gegenüberliegende Nutflanke 4c, gebildet sein.

Im Gegensatz zur ersten Ausführung ist bei der zweiten bis vierten Ausführung der Erfindung im Betriebszustand die Umfangsdichtung 3 zwischen dem zweiten Teilexpansionsraum E2 und dem Spalt 7 zwischen den Kupplungsteilen 1, 2 angeordnet, d. h. der Spalt 7 und der zweite Teilexpansionsraum E2 stehen nicht miteinander in Verbindung. Bei der dritten und vierten Ausführung, die sich jeweils auf eine in ihrer axialen Richtung verpresste Umfangsdichtung 3 bezieht, sind die zu verbindenden Kupplungsteile 1,2 mit einer verschwindend kleinen Spaltweite relativ zueinander positioniert.

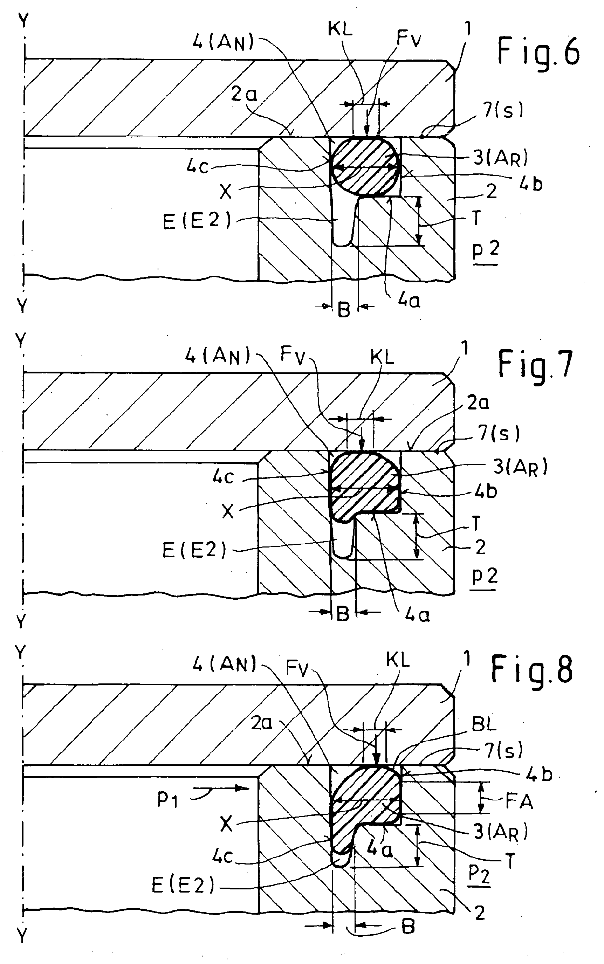

Der zweite Teilexpansionsraum E2 ist dabei derart ausgebildet, dass im Betriebszustand der gegenüber dem Vergleichsdruck p₂ erhöhte Druck p₁ einen Teil der Umfangsdichtung 3 in den zweiten Teilexpansionsraum E2 drängt, wie dies Fig. 5 und 8 veranschaulichen. Das bedeutet, dass der Expansionsraum E2 hier sowohl im strengen physikalischen Sinn die Funktion der Schaffung eines zusätzlichen Raumes zur Aufnahme eines vergrößerten Volumenteils der Umfangsdichtung 3 erfüllt, als auch die Funktion der Bildung eines Ausweichraums zur Aufnahme eines deformierten Volumenteils der Umfangsdichtung 3 übernimmt. Die vorzugsweise asymmetrische Lage der Umfangsdichtung 3 in der Nut 4 wird dabei ausschließlich durch eine asym metrische Form der radialen Querschnittsfläche A_{R} der verpressten Umfangsdichtung 3 hervorgerufen.

Für die in Fig. 3 bis 5 gezeigte zweite Ausführung der Erfindung ist spezifisch, dass es sich wie bei der ersten Ausführung um ein erfindungsgemäßes Verbindungssystem handelt, bei dem das zweite Kupplungsteil 2 entlang einer Steckachse X-X in eine Aufnahmeöffnung 6 des ersten Kupplungsteils 1 mit einem Schaft 5, auf dessen Mantelfläche die Nut 4 umfangsgemäß verläuft, einsteckbar ist, wodurch senkrecht zur Steckachse eine radiale Verpressung der Umfangsdichtung 3 erfolgt. Der Expansionsraum E, insbesondere der zweite Teilexpansionsraum E2, ist wie in der ersten Ausführung derart ausgebildet, dass eine Expansion der Umfangsdichtung 3, wie sie im Betriebszustand bei einer gegenüber der Raumtemperatur erhöhten Temperatur oder durch Quellung unter dem Einfluss des Fluids auftritt, parallel zur Wirkungsrichtung der Vorpresskraft Fᵥ erfolgt. Auf die jeweilige spezifische Vorteilhaftigkeit der verschiedenen Ausführungen in bestimmten Einsatzfällen wurde dabei bereits vorstehend verwiesen.

Bei der in Fig. 6 bis 8 gezeigten Ausführung der Erfindung handelt es sich im Gegensatz zu den ersten beiden Ausführungen um ein erfindungsgemäßes Verbindungssystem, bei dem das zweite Kupplungsteil 2 in Richtung einer Montageachse Y-Y auf eine Montageebene des ersten Kupplungsteils 1 mit einer Stirnfläche 2a, auf der die Nut 4 umfangsgemäß verläuft, aufpressbar ist, wodurch in Richtung der Montageachse Y-Y eine axiale Verpressung der Umfangsdichtung 3 erfolgt.

In Übereinstimmung mit der ersten Ausführung der Erfindung ist dabei vorgesehen, dass der Expansionsraum E, insbesondere hier der zweite Teilexpansionsraum E2, derart ausgebildet ist, dass eine Expansion der Umfangsdichtung 3, wie sie im Betriebszustand bei einer gegenüber der Raumtemperatur erhöhten Temperatur (Fig. 7 und 8) oder durch Quellung unter dem Einfluss des Fluids auftritt, in Wirkungsrichtung der Vorpresskraft Fᵥ erfolgt.

Eine derartige Ausbildung eines erfindungsgemäßen Verbindungssystems ist überall dort in vorteilhafter Weise einsetzbar, wo in oder an Leitungen, Armaturen oder Ag gregaten als Spalt 7 zwischen den beiden Kupplungsteilen 1, 2 ein Radialspalt abzudichten ist.

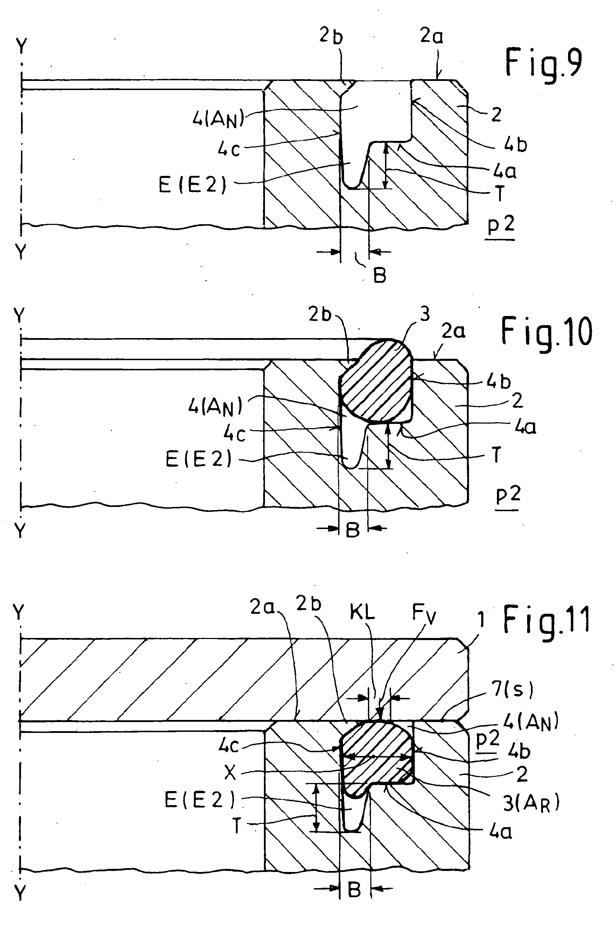

Bei dem vierten Ausführungsbeispiel der Erfindung nach Fig. 9 bis 11 liegen die gleichen konstruktiven Grundgegebenheiten vor wie bei dem dritten Ausführungsbeispiel der Erfindung. Allerdings - und dies macht insbesondere Fig. 10 deutlich - gestattet diese Ausführung in besonders vorteilhafter Weise eine Vormontage einer Umfangsdichtung 3 an einem in Fig. 9 separat dargestellten zweiten Kupplungteil 2. Dies wird dadurch ermöglicht, dass zumindest an einer der beiden Nutflanken 4b, 4c, insbesondere - wie dargestellt - an der Nutflanke 4c auf der Seite, die dem abzudichtenden Spalt 7 gegenüber liegt, insbesondere durch eine Hinterschneidung, vorzugsweise im oberen Bereich der Nut 4, ein Vorsprung 2b ausgebildet ist, der die Umfangsdichtung 3 in einem Vormontagezustand unverlierbar in der Nut 4 festhält.

Die Erfindung ist nicht auf die dargestellten Ausführungsbeispiele beschränkt, sondern umfasst auch alle im Sinne der Erfindung gleichwirkenden Ausführungen, wie dies bereits durch die unterschiedlichen dargestellten konstruktiven Ausführungsformen der verschiedenen Expansionsräume bzw. Bauteile und Verpressungsarten deutlich wird. So ist es beispielsweise möglich, Umfangsdichtungen 3 mit anderen als den dargestellten Querschnittsformen einzusetzen, wie diese aus dem deutschen Gebrauchsmuster DE 20 2004 017 316 U1 bekannt sind.

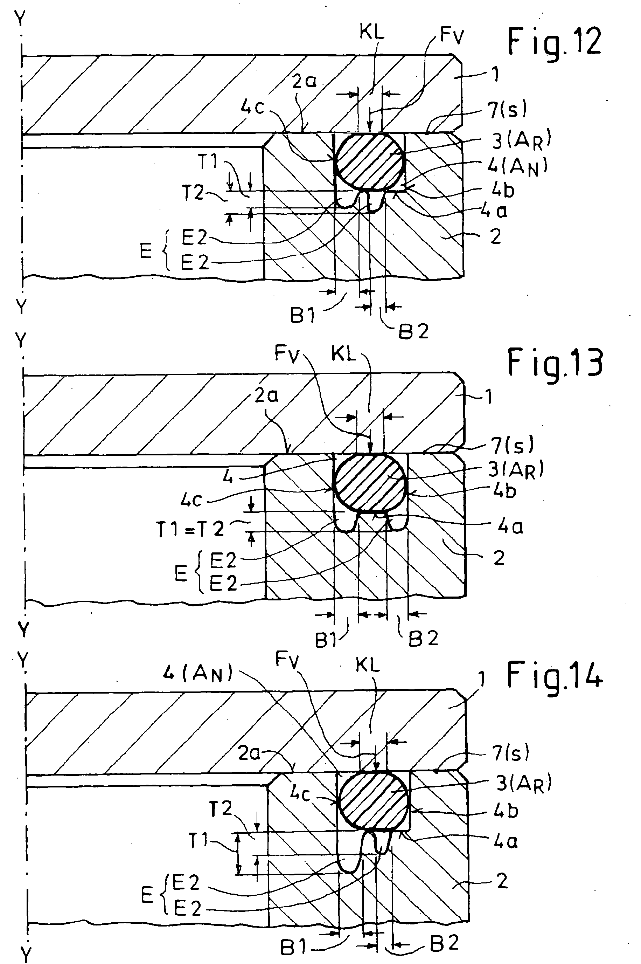

Insbesondere ist es auch möglich, dass sich der gesamte Expansionsraum E aus zwei oder mehr gleichartigen oder ungleichartigen Teilexpansionsräumen E1, E2 zusammensetzt, wie dies bereits erwähnt wurde und anhand der Fig. 12 bis 14 deutlich wird, die exemplarisch weitere Ausführungsformen eines erfindungsgemäßen Verbindungssystems zeigen.

Bei diesen Ausführungsformen handelt es sich - wie bei den in Fig. 6 bis 11 gezeigten Ausführungen der Erfindung - jeweils um ein erfindungsgemäßes Verbindungssystem, bei dem das zweite Kupplungsteil 2 in Richtung einer Montageachse Y-Y auf eine Montageebene des ersten Kupplungsteils 1 mit einer die Nut enthaltenden Stirnfläche 2a aufpressbar ist, wodurch in Richtung der Montageachse Y-Y eine axiale Verpressung der Umfangsdichtung 3 erfolgt.

Die Fig. 12 bis 14 zeigen dabei jeweils erfindungsgemäße Verbindungssysteme mit zwei Teilexpansionsräumen E2. Durch eine Aufteilung des gesamten Expansionsraumes E in gleichartige Teilexpansionsräume E2 - oder auch ungleichartige Teilexpansionsräume E1, E2 - ist es möglich, unter Berücksichtigung der Vorspannkraft Fᵥ und des Systemdrucks p₁ die Eigenspannungsverteilung in der Umfangsdichtung 3 im Betriebszustand zu optimieren, wobei insbesondere ein gleichmäßiger Belastungszustand im Material der Umfangsdichtung 3 eingestellt werden kann.

Die Teilexpansionsräume E2 sind dabei derart ausgebildet, dass eine Expansion der Umfangsdichtung 3, wie sie im Betriebszustand bei einer gegenüber der Raumtemperatur erhöhten Temperatur oder durch Quellung unter dem Einfluss des Fluids auftritt, in Wirkungsrichtung der Vorpresskraft Fᵥ erfolgt.

So zeigt Fig. 12 eine Ausführung mit zwei Teilexpansionsräumen E2, die etwa gleiche Tiefen T1, T2, jedoch unterschiedliche Breiten B1, B2 aufweisen. Ein Teilexpansionsraum E2, der als Vertiefung im Nutgrund 4a ausgebildet ist, weist dabei eine Seitenwand auf, die durch die Nutflanke 4c auf der Seite des Wirksamwerdens des Systemdrucks p₁, also auf der Seite, die dem abzudichtenden Spalt 7 gegenüberliegt, gebildet ist. Dieser Teilexpansionsraum E2 weist die größere Breite B1 auf, die nahezu genauso groß ist wie seine Tiefe T1. Der zweite Teilexpansionsraum E2, der ebenfalls als Vertiefung im Nutgrund 4a ausgebildet ist, befindet sich etwa in der Mitte des Nutgrundes 4a und weist die vergleichsweise kleinere Breite B2 auf.

Fig. 13 zeigt eine Ausführung mit zwei Teilexpansionsräumen E2, die etwa gleiche Tiefen T1, T2 und gleiche Breiten B1, B2 aufweisen. Ein Teilexpansionsraum E2, der als Vertiefung im Nutgrund 4a ausgebildet ist, weist dabei eine Seitenwand auf, die durch die Nutflanke 4c auf der Seite des Wirksamwerdens des Systemdrucks p₁, also auf der Seite, die dem abzudichtenden Spalt 7 gegenüberliegt, gebildet ist. Der andere Teilexpansionsraum E2, der ebenfalls als Vertiefung im Nutgrund 4a ausgebildet ist, weist dabei vorteilhafterweise eine Seitenwand auf, die durch die Nutflanke 4b auf der Seite des abzudichtenden Spaltes 7 gebildet ist.

Die Ausführung in Fig. 14 besitzt wiederum zwei, jeweils als Vertiefung im Nutgrund 4a ausgebildete Teilexpansionsräumen E2, die sich sowohl in ihren Tiefen T1, als auch in ihren Breiten B1, B2 unterscheiden. Die Lage der Teilexpansionsräume E2 entspricht dabei derjenigen der Ausführung gemäß Fig. 12. Der Teilexpansionsraum E2, der die Seitenwand aufweist, die durch die Nutflanke 4c auf der Seite des Wirksamwerdens des Systemdrucks p₁ gebildet ist, besitzt sowohl eine größere Tiefe T1, als auch eine größere Breite B1 als es die jeweiligen Größen T2, B2 des anderen Teilexpansionsraumes E2 sind.

Zwei oder mehr Teilexpansionsräume E1, E2 können auch in erfindungsgemäßen Systemen mit radialer Verpressung, wie gemäß den Ausführungsbeispielen nach Fig. 1 bis 5 eingesetzt werden, wobei die Teilexpansionsräume E2 vorteilhafterweise - sofern erforderlich - auch im Sinne von Mitteln zur mechanischen Hemmung einer axialen Bewegung der Umfangsdichtung 3 wirksam werden können.

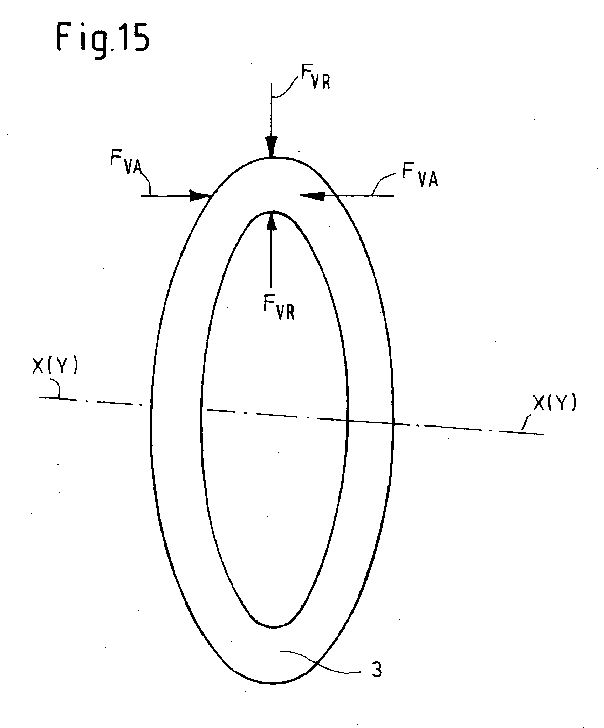

Zur geometrischen Veranschaulichung der Kräfteverhältnisse in einem erfindungsgemäßen Verbindungssystem bei axialer und radialer Verpressung der Umfangsdichtung 3 ist in Fig. 15 eine perspektivische Darstellung einer als O-Ringdichtung ausgebildeten Umfangsdichtung wiedergegeben. Nur in dieser zeichnerischen Darstellung sind dabei die radialen Vorpresskräfte mit dem Bezugszeichen F_{VR} und die axialen Vorpresskräfte mit dem Bezugszeichen F_{VA} bezeichnet. Für die in den Beispielen beschriebene radiale Verpressung gilt die Achsbezeichnung X-X, für die axiale Verpressung die Achsbezeichnung Y-Y.

Es ist außerdem auch möglich, dass der Expansionsraum E bzw. ein oder mehrere Teilexpansionsräume E1, E2 desselben, im ersten Bauteil 1, also dem Bauteil liegen, das keine Nut 4 aufweist. In diesem Fall kann die der Erfindung zugrunde liegende Aufgabe durch ein gattungsgemäßes Verbindungssystem für Leitungen, Armaturen oder Aggregate gelöst werden, bei dem im ersten Kupplungsteil 1 und/oder im zweiten Kupplungsteil 2, ein Expansionsraum E für die Umfangsdichtung 3 ausgebildet ist, der die Umfangsdichtung 3 derart aufnimmt, dass bei einer Volumenvergrößerung der Umfangsdichtung 3, wie sie im Betriebszustand bei einer gegenüber der Raumtemperatur erhöhten Temperatur oder durch Quellung unter dem Einfluss des Fluids auftritt, und/oder bei einer Deformation der Umfangsdichtung, wie sie unter dem Einfluss der Vorpresskraft Fᵥ oder des erhöhten Drucks p₁ auftritt, ein Füllgrad, der sich als Quotient aus einer radialen Querschnittsfläche A_{R} der verpressten Umfangsdichtung 3 und der Summe aus den Querschnittsflächen AN der Nut 4, des Expansionsraums E und gegebenenfalls des abzudichtenden Spalts 7, ergibt, kleiner ist als 100 Prozent.

Die Erfindung ist bislang noch nicht auf die in den Ansprüchen 1 und 19 definierten Merkmalskombinationen beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

### Bezugszeichen

- 1: erstes Kupplungsteil
- 2: zweites Kupplungsteil
- 2a: Stirnfläche von 2
- 2b: Vorsprung von 2
- 3: Umfangsdichtung
- 4: Nut für 3
- 4a: Nutgrund von 4
- 4b: Nutflanke von 4 bei 7
- 4c: Nutflanke von 4
- 4d: Schrägfläche von 4
- 5: Schaft von 2
- 6: Aufnahmeöffnung von 1
- 7: Spalt zwischen 1 und 2

- A_{N}: Querschnitt von 4 (einschließlich E)
- A_{R}: radialer Querschnitt von 3, deformiert,
- B, B1, B2: Breite von E2
- BL: Bogenlänge von 3
- E: Expansionsraum
- E1: erster Teilexpansionsraum
- E2: zweiter Teilexpansionsraum
- Fv: Vorpreßkraft von 3
- F_{VA}: Vorpreßkraft von 3, axial (nur in Fig. 15)
- F_{VR}: Vorpreßkraft von 3, radial (nur in Fig. 15)
- FA: Anlagefläche von 3 an 4b
- KL: Kontaktlänge von 3 mit 1 oder 2
- NL: Nutlänge von 4 (in Richtung X-X)
- NLG: Länge von 4a, Abstand zwischen 4d und 4b
- p₁: hoher Fluiddruck
- p₂: niedriger Fluiddruck
- s: Spaltweite von 7
- T, T1, T2: Tiefe von E2
- X: charakteristische axiale Hauptabmessung von 3
- X-X: Längsachse von 1, 2, radiale Verpressung
- Y-Y: Längsachse von 2, axiale Verpressung

## Patentansprüche

1. Verbindungssystem für Leitungen, Armaturen oder Aggregate, die zur Führung eines mit einem gegenüber einem Vergleichsdruck (p₂) erhöhten Druck (p₁) beaufschlagten Fluids bestimmt sind, umfassend ein erstes Kupplungsteil (1), wie ein Gehäuseteil, ein mit dem ersten Kupplungsteil (1) verbindbares zweites Kupplungsteil (2), wie z. B. ein Steckerteil, und mindestens eine aus einem Elastomer bestehende, im Betriebszustand durch den erhöhten Druck (p1) beaufschlagte Umfangsdichtung (3), die in einer Nut (4) angeordnet ist, welche umfangsgemäß in einem der beiden Kupplungsteile (1, 2) ausgebildet ist und einen Nutgrund (4a), zwei Nutflanken (4b, 4c) sowie auf der Seite des erhöhten Druckes (p₁) eine Stufe (4e) aufweist, wobei die Umfangsdichtung (3) im Betriebszustand in der Nut (4) eine Position einnimmt, in der sie unter Deformation und Erzeugung einer Vorpresskraft (Fᵥ) einen Spalt (7) zwischen den Kupplungsteilen (1, 2) verschließt und, wenn die Kupplungsteile (1, 2) miteinander verbunden sind, in einer Anlageposition an der Nutflanke (4b) auf der Seite des abzudichtenden Spaltes (7) gehalten ist, wobei in der Nut (4) ein Expansionsraum für die Umfangsdichtung (3) ausgebildet ist, der die Umfangsdichtung (3) derart aufnimmt, dass bei der Deformation der Umfangsdichtung (3), wie sie unter dem Einfluss der Vorpresskraft (Fᵥ) und/oder des erhöhten Drucks (p₁) auftritt, ein Füllgrad der Nut (4), der sich als Quotient aus einer radialen Querschnittsfläche (A_{R}) der verpressten Umfangsdichtung (3) und der Querschnittsfläche (A_{N}) der Nut (4) ergibt, kleiner ist als 100 Prozent, wobei die Umfangsdichtung (3) ausschließlich an der Nutflanke (4b) auf der Seite des abzudichtenden Spaltes (7) anliegt und von der gegenüberliegenden Nutflanke (4c) beabstandet ist,
**dadurch gekennzeichnet, dass** der Expansionsraum (E) für die Umfangsdichtung (3) derart dimensioniert ist, dass bei einer Volumenvergrößerung der Umfangsdichtung (3), wie sie im Betriebszustand bei einer gegenüber der Raumtemperatur erhöhten Temperatur und/oder durch Quellung unter dem Einfluss des Fluids auftritt, der Füllgrad der Nut (4) kleiner ist als 100 Prozent, wobei der Expansionsraum (E) einen ersten Teilexpansionsraum (E1) umfasst, welcher durch eine Bemessung eines Abstandes (NL) zwischen den beiden Nutflanken (4b, 4c) bestimmt ist, wobei dieser Abstand (NL) zwischen den Nutflanken (4b, 4c) sowie eine Länge (NLG) des Nutgrundes (4a) und eine maximale axiale Hauptabmessung (X) der radialen Querschnittsfläche (A_{R}) der Umfangsdichtung (3) derart bemessen sind, dass die Umfangsdichtung (3) bei Vorliegen ihrer Anlageposition an der Nutflanke (4b) auf der Seite des abzudichtenden Spaltes (7) im montierten, aber noch nicht unter dem Einfluss der Vorpresskraft (Fᵥ) stehenden Zustand nicht über die Stufe (4e)_der Nut (4) hinausragt, wobei die maximale axiale Hauptabmessung (X) im unter dem Einfluss der Vorpresskraft (Fᵥ) stehenden Zustand der Umfangsdichtung (3) bei Raumtemperatur nicht kleiner als die Länge (NLG) des Nutgrundes (4a) ist.

2. Verbindungssystem nach Anspruch 1,
**dadurch gekennzeichnet, dass** der Expansionsraum (E) derart dimensioniert ist, dass bei einer Volumenvergrößerung der Umfangsdichtung (3) und/oder durch Quellung unter dem Einfluss des Fluids, wie sie im Betriebszustand bei einer Temperatur bis zu 150 °C und/oder bei einem erhöhten Druck (p₁), welcher bei einem pneumatischen Fluid bis zu 100 bar oder bei einem hydraulischen Fluid bis zu 2500 bar beträgt, auftritt, der Füllgrad der Nut (4) kleiner ist als 100 Prozent.

3. Verbindungssystem nach Anspruch 1 oder 2,
**dadurch gekennzeichnet, dass** der Expansionsraum (E) aus zwei oder mehr gleichartig oder ungleichartig ausgebildeten Teilexpansionsräumen (E1, E2) gebildet ist.

4. Verbindungssystem nach einem der Ansprüche 1 bis 3,
**dadurch gekennzeichnet, dass** der Expansionsraum (E), insbesondere dessen erster Teilexpansionsraum (E1) und/oder dessen zweiter Teilexpansionsraum (E2), derart ausgebildet ist/sind, dass eine Expansion der Umfangsdichtung (3), wie sie im Betriebszustand bei einer gegenüber der Raumtemperatur erhöhten Temperatur und/oder durch Quellung unter dem Einfluss des Fluids auftritt, senkrecht zur Wirkungsrichtung der Vorpresskraft (Fᵥ) erfolgt.

5. Verbindungssystem nach einem der Ansprüche 1 bis 3,
**dadurch gekennzeichnet, dass** der Expansionsraum (E), insbesondere dessen erster Teilexpansionsraum (E1) und/oder zweiter Teilexpansionsraum (E2), derart ausgebildet ist/sind, dass eine Expansion der Umfangsdichtung (3), wie sie im Betriebszustand bei einer gegenüber der Raumtemperatur erhöhten Temperatur und/oder durch Quellung unter dem Einfluss des Fluids auftritt, in Wirkungsrichtung der Vorpresskraft (Fᵥ) erfolgt.

6. Verbindungssystem nach einem der Ansprüche 1 bis 5,
**dadurch gekennzeichnet, dass** das zweite Kupplungsteit (2) entlang einer Steckachse (X-X) in eine Aufnahmeöffnung (6) des ersten Kupplungsteils (1) mit einem Schaft (5), auf dessen Mantelfläche die Nut (4) umfangsgemäß verläuft, einsteckbar ist, wodurch senkrecht zur Steckachse (X-X) eine radiale Verpressung der Umfangsdichtung (3) erfolgt.

7. Verbindungssystem nach einem der Ansprüche 1 bis 5,
**dadurch gekennzeichnet, dass** das zweite Kupplungsteil (2) in Richtung einer Montageachse (Y-Y) auf eine Montageebene des ersten Kupplungsteils (1) mit einer Stirnfläche (2a), auf der die Nut (4) umfangsgemäß verläuft, aufpressbar ist, wodurch in Richtung der Montageachse eine axiale Verpressung der Umfangsdichtung (3) erfolgt.

8. Verbindungssystem nach einem der Ansprüche 1 bis 7,
**dadurch gekennzeichnet, dass** der Expansionsraum (E), insbesondere zumindest der erste Teilexpansionsraum (E1), im Betriebszustand mit dem Spalt (7) zwischen den Kupplungsteilen (1, 2) in direkter Verbindung steht.

9. Verbindungssystem nach einem der Ansprüche 1 bis 8,
**dadurch gekennzeichnet, dass** der Expansionsraum (E), zumindest der erste Teilexpansionsraum (E1), derart ausgebildet ist, dass im Betriebszustand der gegenüber dem Vergleichsdruck (p₂) erhöhte Druck (p₁) die Vorpresskraft (Fᵥ) der Umfangsdichtung (3) erhöht.

10. Verbindungssystem nach einem der Ansprüche 1 bis 9,
**dadurch gekennzeichnet, dass** der Expansionsraum (E) einen zweiten Teilexpansionsraum (E2), umfasst, der durch eine Vertiefung im Nutgrund (4a) der Nut (4) gebildet ist.

11. Verbindungssystem nach Anspruch 10,
**dadurch gekennzeichnet, dass** die Breite (B, B1, B2) der Vertiefung im Nutgrund (4a) klein gegenüber einer maximalen axialen Hauptabmessung des Querschnitts der Umfangsdichtung (3) im unverpressten Zustand, wie bei einem O-Ring dem Schnurdurchmesser, ist.

12. Verbindungssystem nach Anspruch 10 oder 11,
**dadurch gekennzeichnet, dass** sich die Breite (B, B1, B2) der Vertiefung mit Zunahme ihrer Tiefe (T, T1, T2) vom Nutgrund (4a) der Nut (4) ausgehend verjüngt, wobei die Tiefe (T, T1, T2) vorzugsweise größer ist als die Breite (B, B1, 82) der Vertiefung.

13. Verbindungssystem nach einem der Ansprüche 10 bis 12,
**dadurch gekennzeichnet, dass** eine Seitenwand der Vertiefung im Nutgrund (4a) durch eine der beiden Nutflanken (4b, 4c) der Nut (4), insbesondere durch die der Nutflanke (4b) auf der Seite des abzudichtenden Spaltes (7) gegenüberliegende Nutflanke (4c), gebildet ist.

14. Verbindungssystem nach einem der Ansprüche 10 bis 12,
**dadurch gekennzeichnet, dass** die Vertiefung in einem mittleren Bereich des Nutgrundes (4a) angeordnet ist.

15. Verbindungssystem nach einem der Ansprüche 10 bis 14,
**dadurch gekennzeichnet, dass** im Betriebszustand die Umfangsdichtung (3) zwischen dem zweiten Teilexpansionsraum (E2) und dem Spalt (7) zwischen den Kupplungsteilen (1, 2) angeordnet ist.

16. Verbindungssystem nach einem der Ansprüche 10 bis 15,
**dadurch gekennzeichnet, dass** der zweite Teilexpansionsraum (E2) derart ausgebildet ist, dass im Betriebszustand der gegenüber dem Vergleichsdruck (p₂) erhöhte Druck (p₁) einen Teil der Umfangsdichtung (3) in den zweiten Teilexpansionsraum (E2) drängt.

17. Verbindungssystem nach einem der Ansprüche 1 bis 16,
**dadurch gekennzeichnet, dass** der Expansionsraum (E) zumindest zwei Expansionsräumen (E2) umfasst, die durch an unterschiedlichen Stellen angeordnete Vertiefungen im Nutgrund (4a) gebildet sind, welche jeweils gleiche oder unterschiedliche Tiefen (T1, T2) und/oder Breiten (B1, B2) aufweisen.

18. Verbindungssystem nach einem der Ansprüche 1 bis 17,
**dadurch gekennzeichnet, dass** zumindest an einer der beiden Nutflanken (4b, 4c), insbesondere an der Nutflanke (4c) auf der Seite, die dem abzudichtenden Spalt (7) gegenüber liegt, insbesondere durch eine Hinterschneidung, vorzugsweise im oberen Bereich der Nut (4), ein Vorsprung (2b) ausgebildet ist, der die Umfangsdichtung (3) in einem Vormontagezustand unverlierbar in der Nut (4) festhält.

19. Verbindungssystem nach einem der Ansprüche 1 bis 18,
**dadurch gekennzeichnet, dass** in der Nut (4) Mittel (4d, E2) zur mechanischen Hemmung einer axialen Bewegung der Umfangsdichtung (3) angeordnet sind, die derart ausgeführt sind, dass die Umfangsdichtung (3) - sowohl, wenn das eine Kupplungsteil (2) mit dem Schaft (5) in die Aufnahmeöffnung (6) des anderen Kupplungsteiles (1) eingesteckt wird, als auch bei einer entgegengesetzt wirkenden relativen Rückbewegung der Kupplungsteile (1, 2) zueinander - in der Position gehalten ist, in der die Umfangsdichtung (3) im Betriebszustand den Spalt (7) der Aufnahmeöffnung (6) verschließt und dabei mit einer axial gerichteten Anlagefläche (FA) an einer auf der Seite des abzudichtenden Spaltes (7) liegenden Nutflanke (4b) anliegt.

## Claims

1. A connecting system for conduits, fittings or assemblies which are intended for routing a fluid which is under a pressure (p₁) that is higher than a comparison pressure (p₂), including: a first coupling part (1), such as a housing part; a second coupling part (2) which may be connected to the first coupling part (1), such as a plug-in part; and at least one peripheral seal (3) which is made of an elastomer and in the operating condition is under the higher pressure (p1) and is arranged in a groove (4) which is constructed around the periphery of one of the two coupling parts (1, 2) and has a groove base (4a), two groove flanks (4b, 4c) and, on the side with higher pressure (p₁), a step (4e), wherein in the operating condition the peripheral seal (3) adopts a position in the groove (4) in which, with deformation and generation of an initial pressing force (Fᵥ), it seals off a gap (7) between the coupling parts (1, 2) and, when the coupling parts (1, 2) are connected to one another, it is held in a position bearing against the groove flank (4b) on the side where the gap (7) is to be sealed, wherein there is constructed in the groove (4) an expansion space for the peripheral seal (3) which receives the peripheral seal (3) such that when the peripheral seal (3) is deformed, as occurs under the effect of the initial pressing force (Fᵥ) and/or the higher pressure (p₁), the degree to which the groove (4) is filled, which is expressed as the quotient of a radial cross-sectional area (A_{R}) of the compressed peripheral seal (3) and the cross-sectional area (A_{N}) of the groove (4), is less than 100%, wherein the peripheral seal (3) bears exclusively against the groove flank (4b) on the side where the gap (7) is to be sealed, and is spaced from the opposing groove flank (4c), **characterised in that** the expansion space (E) for the peripheral seal (3) is of a size such that when there is an increase in the volume of the peripheral seal (3), as occurs in the operating condition in the event of a temperature higher than room temperature and/or as a result of swelling under the effect of the fluid, the degree of filling of the groove (4) is less than 100%, wherein the expansion space (E) includes a first part expansion space (E1) which is defined by the size of a spacing (NL) between the two groove flanks (4b, 4c), wherein this spacing (NL) between the groove flanks (4b, 4c) and a length (NLG) of the groove base (4a) and a maximum axial principal dimension (X) of the radial cross-sectional area (A_{R}) of the peripheral seal (3) are of a size such that, when the peripheral seal (3) is in its position bearing against the groove flank (4b) on the side where the gap (7) is to be sealed, in the assembled condition but not yet under the effect of the initial pressing force (Fᵥ), the peripheral seal (3) does not project beyond the step (4e) of the groove (4), wherein the maximum axial principal dimension (X) in the condition of the peripheral seal (3) under the effect of the initial pressing force (Fᵥ) is not less at room temperature than the length (NLG) of the groove base (4a).

2. A connecting system according to Claim 1, **characterised in that** the expansion space (E) is of a size such that, when there is an increase in the volume of the peripheral seal (3) and/or as a result of swelling under the effect of the fluid, as occurs in the operating condition at a temperature of up to 150°C and/or at a higher pressure (p₁) which, with a pneumatic fluid, is up to 100 bar or, with a hydraulic fluid, is up to 2500 bar, the degree of filling of the groove (4) is less than 100%.

3. A connecting system according to Claim 1 or 2, **characterised in that** the expansion space (E) is formed by two or more part expansion spaces (E1, E2) which are of similar or dissimilar construction.

4. A connecting system according to one of Claims 1 to 3, **characterised in that** the expansion space (E), in particular the first part expansion space (E1) thereof and/or the second part expansion space (E2) thereof, is/are constructed such that expansion of the peripheral seal (3), as occurs in the operating condition at a temperature which is higher than room temperature and/or as a result of swelling under the effect of the fluid, takes place perpendicular to the direction in which the initial pressing force (Fᵥ) acts.

5. A connecting system according to one of Claims 1 to 3, **characterised in that** the expansion space (E), in particular the first part expansion space (E1) and/or the second part expansion space (E2) thereof, is/are constructed such that expansion of the peripheral seal (3), as occurs in the operating condition at a temperature which is higher than room temperature and/or as a result of swelling under the effect of the fluid, takes place in the direction in which the initial pressing force (Fᵥ) acts.

6. A connecting system according to one of Claims 1 to 5, **characterised in that** the second coupling part (2) may be inserted into a receiving opening (6) in the first coupling part (1) along an axis of insertion (X-X) by means of a shaft (5) on the outer surface whereof the groove (4) extends around the periphery, as a result of which a radial compression of the peripheral seal (3) is produced perpendicular to the axis of insertion (X-X).

7. A connecting system according to one of Claims 1 to 5, **characterised in that** the second coupling part (2) may be pressed in the direction of an axis of assembly (Y-Y) onto an assembly plane of the first coupling part (1) by means of an end face (2a) on which the groove (4) extends around the periphery, as a result of which an axial compression of the peripheral seal (3) is produced in the direction of the axis of assembly.

8. A connecting system according to one of Claims 1 to 7, **characterised in that** in the operating condition the expansion space (E), in particular at least the first part expansion space (E1), is in direct contact with the gap (7) between the coupling parts (1, 2).

9. A connecting system according to one of Claims 1 to 8, **characterised in that** the expansion space (E), at least the first part expansion space (E1), is constructed such that in the operating condition the pressure (p₁) which is higher than the comparison pressure (p₂) raises the initial pressing force (Fᵥ) of the peripheral seal (3).

10. A connecting system according to one of Claims 1 to 9, **characterised in that** the expansion space (E) includes a second part expansion space (E2) which is formed by a depression in the groove base (4a) of the groove (4).

11. A connecting system according to Claim 10, **characterised in that** the width (B, B1, B2) of the depression in the groove base (4a) is small by comparison with a maximum axial principal dimension of the cross-section of the peripheral seal (3) in the uncompressed condition, such as the cord diameter in the case of an O ring.

12. A connecting system according to Claim 10 or 11, **characterised in that** the width (B, B1, B2) of the depression lessens as its depth (T, T1, T2) starting from the groove base (4a) of the groove (4) increases, wherein the depth (T, T1, T2) is preferably greater than the width (B, B1, B2) of the depression.

13. A connecting system according to one of Claims 10 to 12, **characterised in that** a side wall of the depression is formed in the groove base (4a) by one of the two groove flanks (4b, 4c) of the groove (4), in particular by the groove flank (4c) that is opposed to the groove flank (4b) on the side where the gap (7) is to be sealed.

14. A connecting system according to one of Claims 10 to 12, **characterised in that** the depression is arranged in a central region of the groove base (4a).

15. A connecting system according to one of Claims 10 to 14, **characterised in that** in the operating condition the peripheral seal (3) is arranged between the second part expansion space (E2) and the gap (7) between the coupling parts (1, 2).

16. A connecting system according to one of Claims 10 to 15, **characterised in that** the second part expansion space (E2) is constructed such that in the operating condition the pressure (p₁) which is higher than the comparison pressure (p₂) forces part of the peripheral seal (3) into the second part expansion space (E2).

17. A connecting system according to one of Claims 1 to 16, **characterised in that** the expansion space (E) includes at least two expansion spaces (E2) which are formed by depressions at different locations in the groove base (4a) and which respectively have similar or dissimilar depths (T1, T2) and/or widths (B1, B2).

18. A connecting system according to one of Claims 1 to 17, **characterised in that** a projection (2b) is constructed on at least one of the two groove flanks (4b, 4c), in particular on the groove flank (4c) on the side opposed to the gap (7) to be sealed, in particular by means of an undercut, preferably in the upper region of the groove (4), and this projection (2b) keeps the peripheral seal (3) in a pre-assembly condition such that it cannot be released from the groove (4).

19. A connecting system according to one of Claims 1 to 18, **characterised in that** there are arranged in the groove (4) means (4d, E2) for mechanically constraining axial movement of the peripheral seal (3), the means (4d, E2) being constructed such that the peripheral seal (3) is held - both when the one coupling part (2) is inserted into the receiving opening (6) in the other coupling part (1) by means of the shaft (5) and when there is an opposing relative movement of the coupling parts (1, 2) back towards one another- in the position in which, in the operating condition, the peripheral seal (3) seals off the gap (7) in the receiving opening (6) and in so doing bears by means of an axially directed bearing surface (FA) against a groove flank (4b) which is on the side where the gap (7) is to be sealed.

## Revendications

1. Système de raccordement pour conduites, robinetterie ou éléments fonctionnels qui sont destinés à l'acheminement d'un fluide sollicité par une pression (p₁) accrue par rapport à une pression de référence (p₂), comportant un premier élément de couplage (1), tel qu'une partie de boîtier, un deuxième élément de couplage (2), tel qu'un élément de raccordement, propre à être assemblé au premier élément de couplage (1), et au moins une garniture d'étanchéité périphérique (3) en élastomère, qui est sollicitée en cours de service par la pression (p₁) accrue et qui est posée dans une rainure (4), qui est réalisée sur le pourtour dans l'un des deux éléments de couplage (1, 2) et qui comporte un fond (4a), deux flancs (4b, 4c), ainsi qu'un épaulement (4e) du côté de la pression accrue (p₁), dans lequel ladite garniture d'étanchéité périphérique (3) prend dans la rainure (4), en cours de service, une position dans laquelle, sous l'effet d'une déformation et de la production d'une force de compression initiale (Fᵥ), elle obture une fente (7) entre les éléments de couplage (1, 2), et lorsque les éléments de couplage (1, 2) sont reliés l'un à l'autre, elle est maintenue dans une position d'appui contre le flanc (4b) sur le côté de la fente (7) à obturer hermétiquement, un espace de dilatation pour la garniture d'étanchéité périphérique (3) étant réalisé dans la rainure (4), dans lequel la garniture d'étanchéité périphérique (3) est logée de telle sorte que, au moment de la déformation de la garniture d'étanchéité périphérique (3), telle qu'elle se produit sous l'effet de la force de compression initiale (Fᵥ) et/ou de la pression (p₁) accrue, le degré de remplissage de la rainure (4) est inférieur à 100 pour cent, lequel est obtenu sous forme de quotient entre une surface de section radiale (A_{R}) de la garniture d'étanchéité périphérique (3) comprimée et la surface de section (A_{N}) de la rainure (4), la garniture d'étanchéité périphérique (3) étant exclusivement en appui contre le flanc (4b) sur le côté de la fente (7) à obturer hermétiquement et étant située à distance du flanc (4c) situé en regard,
**caractérisé en ce que** l'espace d'expansion (E) pour la garniture d'étanchéité périphérique (3) est dimensionné de telle sorte qu'en cas d'agrandissement du volume de la garniture d'étanchéité périphérique (3), tel qu'il se produit en cours de service en présence d'une température supérieure à la température ambiante et/ou sous l'effet d'un gonflement dû à la présence du fluide, le degré de remplissage de la rainure (4) est inférieur à 100 pour cent, l'espace d'expansion (E) comportant un premier espace partiel (E1), qui est déterminé par la dimension d'une distance (NL) entre les deux flancs (4b, 4c) de la rainure, ladite distance (NL) entre les flancs (4b, 4c), ainsi qu'une longueur (NLG) du fond (4a) de la rainure et une dimension principale axiale maximale (X) de la surface de section radiale (A_{R}) de la garniture d'étanchéité périphérique (3) étant dimensionnées de telle sorte que la garniture d'étanchéité périphérique (3) ne s'avance pas au-delà de l'épaulement (4e) de la rainure (4), lorsque, dans la position montée, mais non encore sous l'influence de la force de compression initiale (Fᵥ), elle est appliquée contre le flanc (4b) sur le côté de la fente (7) à obturer hermétiquement, la dimension principale axiale maximale (X) n'étant pas inférieure à la longueur (NLG) du fond (4a) de la rainure, lorsque la garniture d'étanchéité périphérique (3) à température ambiante est à l'état soumis à la force de compression initiale (Fᵥ).

2. Système de raccordement selon la revendication 1, **caractérisé en ce que** l'espace d'expansion (E) est dimensionné de telle sorte que, dans le cas d'une augmentation de volume de la garniture d'étanchéité périphérique (3) et/ou sous l'effet d'un gonflement dû à la présence du fluide, tel que cela se produit en cours de service à une température allant jusqu'à 150°C et/ou sous une pression (p₁) accrue, qui peut s'élever jusqu'à 100 bar en présence d'un fluide pneumatique et jusqu'à 2 500 bar en présence d'un fluide hydraulique, le degré de remplissage de la rainure (4) est inférieur à 100 pour cent.

3. Système de raccordement selon la revendication 1 ou 2, **caractérisé en ce que** l'espace d'expansion (E) est formé par deux espaces partiels (E1, E2) ou plus, réalisés de manière identique ou non identique.

4. Système de raccordement selon l'une quelconque des revendications 1 à 3, **caractérisé en ce que** l'espace d'expansion (E), en particulier son premier espace partiel (E1) et/ou son deuxième espace partiel (E2), est/sont réalisé(s) de telle sorte qu'une dilatation de la garniture d'étanchéité périphérique (3), telle qu'elle se produit en cours de service à une température supérieure à la température ambiante et/ou sous l'effet d'un gonflement dû à la présence du fluide, s'effectue transversalement à la direction d'action de la force de compression initiale (Fᵥ).

5. Système de raccordement selon l'une quelconque des revendications 1 à 3, **caractérisé en ce que** l'espace d'expansion (E), en particulier son premier espace partiel (E1) et/ou son deuxième espace partiel (E2), est/sont réalisé(s) de telle sorte qu'une dilatation de la garniture d'étanchéité périphérique (3), telle qu'elle se produit en cours de service à une température supérieure à la température ambiante et/ou sous l'effet d'un gonflement dû à la présence du fluide, s'effectue dans la direction d'action de la force de compression initiale (Fᵥ).

6. Système de raccordement selon l'une quelconque des revendications 1 à 5, **caractérisé en ce que** le deuxième élément de couplage (2), avec une tige (5), sur la paroi latérale de laquelle s'étend en périphérie la rainure (4), peut être enfiché le long d'un axe d'enfichage (X-X) dans une ouverture de réception (6) du premier élément de couplage (1), moyennant quoi la garniture d'étanchéité périphérique (3) est soumise à une compression radiale perpendiculairement à l'axe d'enfichage (X-X).

7. Système de raccordement selon l'une quelconque des revendications 1 à 5, **caractérisé en ce que** le deuxième élément de couplage (2), avec une face frontale (2a) sur la périphérie de laquelle s'étend la rainure (4), peut être emmanché dans le sens d'un axe de montage (Y-Y) sur un plan de montage du premier élément de couplage (1), moyennant quoi la garniture d'étanchéité périphérique (3) est soumise à une compression axiale dans la direction de l'axe de montage.

8. Système de raccordement selon l'une quelconque des revendications 1 à 7, **caractérisé en ce que** l'espace d'expansion (E), en particulier au moins le premier espace partiel (E1), communique directement en cours de service avec la fente (7) entre les éléments de couplage (1, 2).

9. Système de raccordement selon l'une quelconque des revendications 1 à 8, **caractérisé en ce que** l'espace d'expansion (E), au moins le premier espace partiel (E1), est réalisé de telle sorte que, en cours de service, la pression (p₁), accrue par rapport à la pression de référence (p₂), augmente la force de compression initiale (Fᵥ) de la garniture d'étanchéité périphérique (3).

10. Système de raccordement selon l'une quelconque des revendications 1 à 9, **caractérisé en ce que** l'espace d'expansion (E) comporte un deuxième espace partiel (E2) qui est formé par un creux dans le fond (4a) de la rainure (4).

11. Système de raccordement selon la revendication 10, **caractérisé en ce que** la largeur (B, B1, B2) du creux dans le fond (4a) de la rainure est faible par rapport à une dimension principale axiale maximale de la section de la garniture d'étanchéité périphérique (3) à l'état non comprimé, par exemple par rapport au diamètre de corde dans un joint torique.

12. Système de raccordement selon la revendication 10 ou 11, **caractérisé en ce que** la largeur (B, B1, B2) du creux se rétrécit au fur et à mesure de l'augmentation de sa profondeur (T, T1, T2) à partir du fond (4a) de la rainure (4), la profondeur (T, T1, T2) étant de préférence supérieure à la largeur (B, B1, B2) du creux.

13. Système de raccordement selon l'une quelconque des revendications 10 à 12, **caractérisé en ce qu'**une paroi latérale du creux dans le fond (4a) de la rainure est formée par l'un des deux flancs (4b, 4c) de la rainure (4), en particulier par le flanc (4c) situé en regard du flanc (4b) sur le côté de la fente (7) à obturer hermétiquement.

14. Système de raccordement selon l'une quelconque des revendications 10 à 12, **caractérisé en ce que** le creux est agencé dans une zone centrale du fond (4a) de la rainure.

15. Système de raccordement selon l'une quelconque des revendications 10 à 14, **caractérisé en ce que**, en cours de service, la garniture d'étanchéité périphérique (3) est disposée entre le deuxième espace partiel (E2) et la fente (7) entre les éléments de couplage (1, 2).

16. Système de raccordement selon l'une quelconque des revendications 10 à 15, **caractérisé en ce que** le deuxième espace partiel (E2) est réalisé de telle sorte que, en cours de service, la pression (p₁), accrue par rapport à la pression de référence (p₂), pousse une partie de la garniture d'étanchéité périphérique (3) dans le deuxième espace partiel (E2).

17. Système de raccordement selon l'une quelconque des revendications 1 à 16, **caractérisé en ce que** l'espace d'expansion (E) comporte au moins deux espaces partiels (E2), qui sont formés par des creux disposés en différents emplacements du fond (4a) de la rainure, lesdits creux ayant respectivement des profondeurs (T1, T2) identiques ou différentes et/ou des largeurs (B1, B2) identiques ou différentes.

18. Système de raccordement selon l'une quelconque des revendications 1 à 17, **caractérisé en ce qu'**au moins au niveau de l'un des deux flancs (4b, 4c) de la rainure, en particulier au niveau du flanc (4c) sur le côté situé en regard de la fente (7) à obturer hermétiquement, une saillie (2b) est réalisée de préférence dans la zone supérieure de la rainure (4), en particulier par un détalonnage, la garniture d'étanchéité périphérique (3) étant maintenue par ladite saillie de manière captive dans la rainure (4) dans une position de montage préliminaire.

19. Système de raccordement selon l'une quelconque des revendications 1 à 18, **caractérisé en ce que** dans la rainure (4) sont disposés des moyens (4d, E2), qui sont destinés à empêcher mécaniquement un mouvement axial de la garniture d'étanchéité périphérique (3) et qui sont configurés de telle sorte que la garniture d'étanchéité périphérique (3) - lorsque l'un des éléments de couplage (2) est enfiché avec la tige (5) dans l'ouverture de réception (6) de l'autre élément de couplage (1), de même qu'en présence d'un mouvement de retour relatif, agissant en sens opposé, des éléments de couplage (1, 2) l'un par rapport à l'autre - est maintenue dans la position, dans laquelle la garniture d'étanchéité périphérique (3) obture en cours de service la fente (7) de l'ouverture de réception (6) et, en l'occurrence, est en appui avec une surface d'appui (FA), orientée axialement, contre un flanc (4b) situé sur le côté de la fente (7) à obturer hermétiquement.
